## Europäisches Patentamt

## European Patent Office

## Office européen des brevets

(19)

(11) Veröffentlichungsnummer: **0 127 657**
**B1**

(12) **EUROPÄISCHE PATENTSCHRIFT**

(45) Veröffentlichungstag der Patentschrift:
**01.04.87**

(21) Anmeldenummer: **84900029.4**

(22) Anmeldetag: **09.12.83**

(86) Internationale Anmeldenummer:
**PCT/DE 83/00205**

(87) Internationale Veröffentlichungsnummer:
**WO 84/02418 (21.06.84** Gazette **84/15)**

(51) Int. Cl.⁴: **G 11 B 5/41,** G 11 B 23/04

(54) **REINIGUNGSKASSETTE.**

(30) Priorität: **11.12.82 DE 3245877**

(43) Veröffentlichungstag der Anmeldung:
**12.12.84 Patentblatt 84/50**

(45) Bekanntmachung des Hinweises auf die Patenterteilung:
**01.04.87 Patentblatt 87/14**

(84) Benannte Vertragsstaaten:
**DE FR GB**

(56) Entgegenhaltungen:
**EP - A - 0 028 708**
**DE - A - 1 937 152**
**GB - A - 2 073 470**
**US - A - 3 594 850**
**US - A - 3 789 452**
**US - A - 4 100 643**
**US - A - 4 324 014**

(73) Patentinhaber: **BLANK, Thomas H.,**
**Schumannstrasse 13, D-6000 Frankfurt/Main (DE)**
Patentinhaber: **COHN, Gabriel, Im Sachsenlager 7,**
**D-6000 Frankfurt/Main (DE)**

(72) Erfinder: **BLANK, Thomas H., Schumannstrasse 13,**
**D-6000 Frankfurt/Main (DE)**
Erfinder: **COHN, Gabriel, Im Sachsenlager 7,**
**D-6000 Frankfurt/Main (DE)**

(74) Vertreter: **Jochem, Bernd, Dipl.-Wirtsch.-Ing.,**
**Staufenstrasse 36 Postfach 17 41 09,**
**D-6000 Frankfurt/Main (DE)**

## Beschreibung

Die Erfindung betrifft eine Reinigungskassette zur Säuberung von Signalköpfen bei mit Magnetbandkassetten betriebenen Geräten, z.B. Kassetten-Recordern, Video-Recordern und Speichergeräten der Datenverarbeitung, mit einem Hohlraum zur Aufnahme wenigstens des für einen Reinigungsvorgang erforderlichen Volumens Reinigungsflüssigkeit und einem am Signalkopf mechanisch reibend angreifenden Reinigungsorgan, welches mit einer Reinigungsflüssigkeit benetzbar ist.

Signalköpfe, d.h. Aufnahme-, Wiedergabe- und Löschköpfe von mit Magnetbändern betriebenen Geräten werden bisher entweder manuell mittels Wattestäbchen und einer Reinigungsflüssigkeit, wie z.B. Spiritus, Freon und dgl., oder unter Zuhilfenahme einer anstelle der normalen Musik-, Video- oder Datenkassetten in das Gerät einzulegenden und anzutreibenden Reinigungskassette gesäubert. Die bekannten Reinigungskassetten haben als Reinigungsorgan einen bei Betrieb der Kassette durch Exzenterantrieb hin- und hergehend bewegten Schwenkarm, der mit einem kleinen Filzpolster an einem Signalkopf reibt. Das Filzpolster kann von aussen mittels Pipette oder Fläschchens mit Reinigungsflüssigkeit getränkt werden. Da diese leicht flüchtig ist, verdunstet sie zum grössten Teil schon bevor die Kassette eingesetzt und in Betrieb genommen worden ist. Es kann auch immer nur eine sehr kleine Menge Reinigungsflüssigkeit auf das Filzpolster gegeben werden. Dieses reibt und schmiert mit stets derselben kleinen Fläche, die schnell viele scharfkantige Schmutz- und Metalloxidpartikel enthält, an einem einzigen Signalkopf und kann dort zu Beschädigungen führen, während daneben andere Signalköpfe und die mit den Magnetbändern in Berührung kommenden Teile der Antriebsmechanik, d.h. Capstanwelle und Andruckrolle, überhaupt nicht gesäubert werden.

Um alle mit den Magnetbändern in Kontakt kommenden Signalköpfe und Antriebsteile gleichzeitig zu reinigen und den abgelösten Schmutz besser auf dem Reinigungsorgan zu verteilen, ist es bekannt, Reinigungskassetten mit einem nach Art der Magnetbänder geführten Reinigungsband zu verwenden.

Dieses kann entweder trocken laufen und hat dann einen schädlichenden schmirgelnden Effekt, oder es kann zur Tränkung von aussen mit Reinigungsflüssigkeit bestimmt sein. Dabei kann gemäss EP-A-0028708 ein in einem offenen Hohlraum der Kassette enthaltener saugfähiger Körper befeuchtet werden, an dem das Band entlanggeführt wird. Das Befeuchten ist jedoch in jedem Fall ein umständlicher Vorgang. Ausserdem dauert er so lange, dass der grösste Teil der leicht flüchtigen Reinigungsflüssigkeit verdunstet ist, bevor der benetzte Bereich des Bandes zum Einsatz an einem Signalkopf kommt.

Der Erfindung liegt daher die Aufgabe zugrunde, eine Reinigungskassette der eingangs genannten Art zu schaffen, welche eine schnelle und bequeme Handhabung gestattet und eine gründliche Säuberung aller mit den Magnetbändern in Berührung kommenden Signalköpfe und Teile der Antriebsmechanik gewährleistet.

Vorstehende Aufgabe wird bei einer Reinigungskassette der eingangs genannten Art erfindungsgemäss dadurch gelöst, dass der Hohlraum dicht abgeschlossen ist und ein in einer Leitung zwischen dem Hohlraum und dem Reinigungsorgan angeordnetes Auslassventil durch das Kassetten-Gerät betätigbar ist.

Die neue Reinigungskassette wird ohne vorherige umständliche Befeuchtung des Reinigungsorgans wie eine normale Kassette in das Gerät eingelegt und eignet sich daher auch zur Verwendung im Auto. Die Reinigungsflüssigkeit wird bei laufendem Antrieb auf das Reinigungsorgan gegeben und gelangt unmittelbar danach an die zu reinigenden Teile, so dass die Verdunstung kein Problem mehr darstellt.

Damit mehrere Reinigungsvorgänge ohne Nachfüllung von Reinigungsflüssigkeit vorgenommen werden können, ist in bevorzugter Ausgestaltung der Erfindung vorgesehen, dass der grösste Teil des inneren Hohlraums der Kassette eine mit einem Einlassventil versehene, abgedichtete Kammer zur Aufnahme von Reinigungsflüssigkeit bildet. Alternativ könnte der Hohlraum auch eine Aussparung im Kassettengehäuse sein, in welche ein Behälter mit Reinigungsflüssigkeit einsetzbar ist, wobei dieser an die Leitung zum Auslassventil anschliessbar ist.

Je nach Gerät werden die Kassetten mal in horizontaler und mal in vertikaler Lage eingesetzt. Um mit der neuen Reinigungskassette lageunabhängig zu sein, werden nachstehend verschiedene mögliche Ausführungsformen beschrieben. Vorgesehen werden kann z.B. eine von Hand gegen Federkraft zu betätigende Kolbenpumpe oder alternativ, dass die Reinigungsflüssigkeit im Hohlraum mittels Druckgas, durch den eigenen Dampfdruck oder durch einen federbelasteten Kolben mit Druck beaufschlagbar ist, der beim Öffnen des Auslassventils die Reinigungsflüssigkeit zum Reinigungsorgan oder einem dieses benetzenden Teil fördert.

Als Reinigungsorgan kommen verschiedene Arten von Werkzeugen in Frage, beispielsweise bürstenartige Werkzeuge oder solche nach Art der bekannten Ausführungen mit Schwenkarmen. In allen Fällen ergibt sich dabei der Vorteil, dass die Reinigungsflüssigkeit erst nach dem Einsetzen der Kassette in das zu reinigende Gerät automatisch an das Reinigungsorgan herangebracht wird. Besonders bevorzugt wird jedoch als Reinigungsorgan ein durch den Kassettenantriebsmotor umlaufend antreibbares endloses Band oder ein Band, welches von einer Rolle auf eine andere Rolle aufwickelbar ist. Das Band ist zweckmässigerweise an der offenen Seite der Kassette im wesentlichen ebenso wie ein normales Kassettenband geführt und kommt mit denselben Signalköpfen und Antriebsteilen wie dieses in Berührung.

Um von Zeit zu Zeit ein verschmutztes Reinigungsband auswechseln zu können, ist in weiterer bevorzugter Ausgestaltung der Erfindung ein entsprechender Schlitz in einer Seitenwand der Kassette vorgesehen, durch den ein Reinigungsband eingesetzt und herausgenommen werden kann.

Die Erfindung wird nachstehend anhand von in der Zeichnung gezeigten Ausführungsbeispielen näher erläutert. Es zeigen:

Fig. 1 einen Längsschnitt durch eine Reinigungskassette gemäss der Erfindung;

Fig. 2 einen Querschnitt durch die Kassette nach Fig. 1;

Fig. 3 eine Draufsicht auf die offene Seite der Kassette nach Fig. 1 und 2;

Fig. 4 eine vereinfachte Seitenansicht in kleinerem Massstab der Kassette nach Fig. 1 bis 3.

Fig. 5 ein weiteres Ausführungsbeispiel mit einem Kapillarrohr zwischen dem Hohlraum und dem Auslassventil;

Fig. 6 ein weiteres Ausführungsbeispiel mit einem alternativ mit entgegengesetzten Seiten an den Hohlraum anzuschliessenden Dosierzylinder mit frei verschieblichem Kolben;

Fig. 7 ein weiteres Ausführungsbeispiel mit in einer durch den Kassettenantriebsmechanismus drehbaren Trommel angeordnetem Hohlraum und an der Trommel angebrachtem Auslassventil.

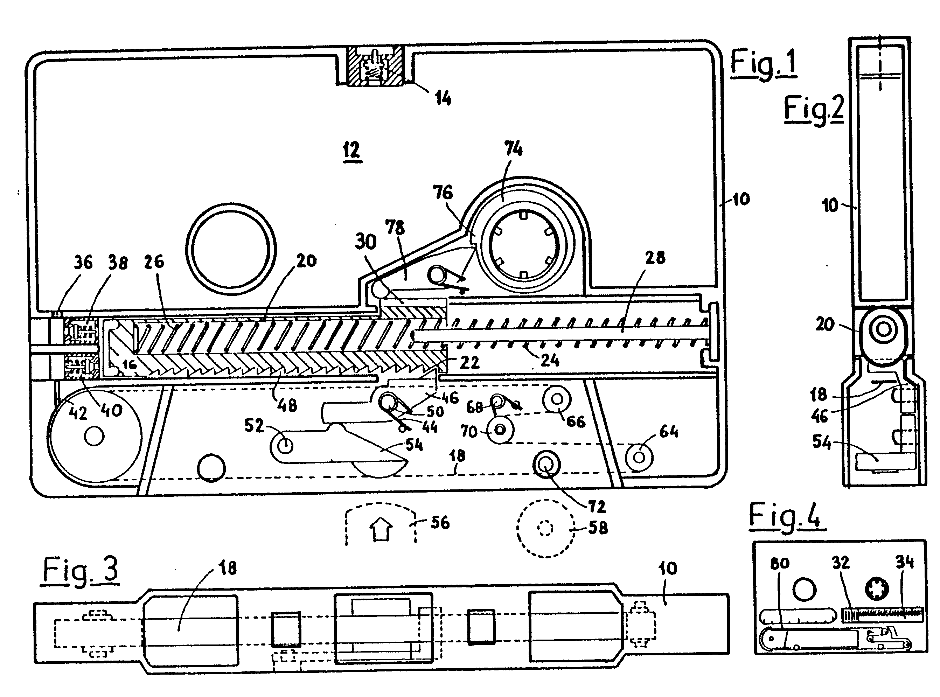

Die gezeigten Reinigungskassetten haben die genormten äusseren Abmessungen der gebräuchlichen Magnetbandkassetten. Im Beispielsfall handelt es sich um eine Kassette für Kassetten-Recorder. Das Gehäuse ist mit 10 bezeichnet. Es gliedert sich im wesentlichen in drei Bereiche. Der grösste Teil wird von einem dicht geschlossenen Hohlraum 12 eingenommen, in den über ein federbelastetes Rückschlagventil 14 als Einlassventil Reinigungsflüssigkeit einfüllbar ist. Im mittleren Bereich ist in der Kassette eine Dosiereinrichtung 16 in Form einer Kolbenpumpe angeordnet, und im erweiterten Bereich der Kassette befinden sich Führungs- und Spannrollen für ein endloses Reinigungsband 18. Die Kolbenpumpe besteht aus einem in das Kassettengehäuse 10 integrierten Zylinder 20, in welchem ein Kolben 22 axial verschieblich geführt ist. Letzterer ist durch eine Druckfeder 24 mit Bezug auf Fig. 1 nach links vorbelastet. Die verhältnismässig lange Feder 24 sitzt auf ihrer mit Bezug auf Fig. 1 linken Seite in einer Bohrung 26 im Kolben 22 und auf der rechten Seite auf einem bis in die Bohrung 26 reichenden Stab 28. Der Kolben 22 ist an seinem hinteren Ende mit einem Kopfstück 30 ausgebildet, welches seitliche Griffflächen 32 hat (siehe Fig. 4), die zum Zurückziehen des Kolbens 22 mit Bezug auf Fig. 1 nach rechts gegen die Kraft der Druckfeder 24 durch gegenüberliegende Längsschlitze 34 in den Seitenflächen des Kassettengehäuses mit den Fingern erfasst werden können.

Wenn der Kolben 22 unter Spannung der Feder 24 nach rechts gezogen wird, wird über eine Auslassöffnung 36 des Hohlraums 12 und ein federbelastetes Rückschlagventil 38 Reinigungsflüssigkeit in den Zylinder 20 gesaugt. Wenn dann anschliessend die Feder 24 den Kolben 22 wieder nach links in die gezeichnete Stellung zurückführt, drückt dieser die Reinigungsflüssigkeit aus dem Zylinder 20 über ein Auslassventil 40 in Form eines federbelasteten Rückschlagventils in eine Auslassleitung 42, die an das Reinigungsband 18 heranführt.

Um nur dann Reinigungsflüssigkeit an das Band 18 abzugeben, wenn dieses umläuft, ist neben dem Kolben 22 ein durch eine Feder 44 in Schliessrichtung vorbelasteter Riegel 46 angeordnet. Dieser greift klinkenartig in eine sich längs des Kolbens 22 erstreckende Zahnstange 48 ein. Der Riegel 46 sitzt drehbar auf einer Achse 50 und kann durch einen einarmigen, bei 52 schwenkbar gelagerten Hebel 54 in die gelöste Stellung verschwenkt werden, wenn beim Einschalten der in das Gerät eingelegten Kassette der mit 56 bezeichnete Tonkopf in der üblichen Weise zusammen mit einer Andruckrolle 58 gegen das Band 18 vorgerückt wird.

Das Reinigungsband 18 ist in sich geschlossen und läuft über drei Führungsrollen 62, 64, 66 sowie eine durch eine Feder 68 belastete Spannrolle 70. Das Band wird ebenso wie ein normales Magnetband einer derartigen Kassette bei 72 durch die Capstan-Welle im Zusammenwirken mit der Andruckrolle 58 umlaufend angetrieben. Dabei kommt der über den Auslasskanal 42 befeuchtete Teil des Reinigungsbandes 18 mit allen zu reinigenden Signalköpfen, wie z.B. dem Tonkopf 56, und Teilen des Antriebsmechanismus, wie z.B. Capstanwelle und Andruckrolle 58, in Berührung.

Der Reinigungsvorgang wird beendet, wenn das Gerät abgeschaltet und dadurch der Tonkopf 56 zurückgezogen wird. Dann hält der Riegel 46 den Kolben 22 in dessen augenblicklicher Lage fest. Andererseits ist es erwünscht, dass der Bandantrieb abgeschaltet wird, wenn der Kolben 22 die vorbestimmte Menge Reinigungsflüssigkeit aus dem Zylinder 20 verdrängt hat, um zu vermeiden, dass das Band 18 längere Zeit trocken an den Signalköpfen reibt. Zu diesem Zweck ist dort, wo sich normalerweise die Aufwickelrolle der Kassette befindet, eine beim Einsetzen der Kassette in das Gerät mit dem Aufwickelantrieb in drehfesten Eingriff zu bringende Buchse 74 angeordnet, die mit einem äusseren Absatz 76 versehen ist, an dem ein federnd vorbelasteter Abschalthebel 78 angreifen kann. Letzterer nimmt normalerweise infolge der auf ihn wirkenden Federkraft eine neutrale Stellung ein, in welcher sich die Buchse 74 frei drehen kann. Wenn jedoch der Kolben 22 am Ende des Druckhubs in die gezeichnete Stellung kommt, stösst das Kopfstück 30 gegen den Abschalthebel 78 und verschwenkt diesen in die gezeigte Sperrstellung. Durch das Blockieren des Aufwickelantriebs mittels Abschalthebel 78 und Buchse 74 wird das Gerät in üblicher Weise ausgeschaltet.

Fig. 2 zeigt die Anordnung der Teile im Querschnitt, wobei ersichtlich ist, dass dem Zylinder 20 eine ovale Form gegeben wurde, um trotz vorgegebener geringer Breite der Kassette einen verhältnismässig grossen Zylinderinhalt zu erreichen.

Aus Fig. 3 ist ersichtlich, dass die offene Stirnseite der Kassette dieselben Durchbrüche wie eine normale Kassette hat.

Fig. 4 lässt erkennen, dass die eine Seitenfläche des Gehäuses 10 im Bereich der Bandführung einen entsprechend verlaufenden Schlitz 80 hat, der das Auswechseln des Bandes 18 ermöglicht.

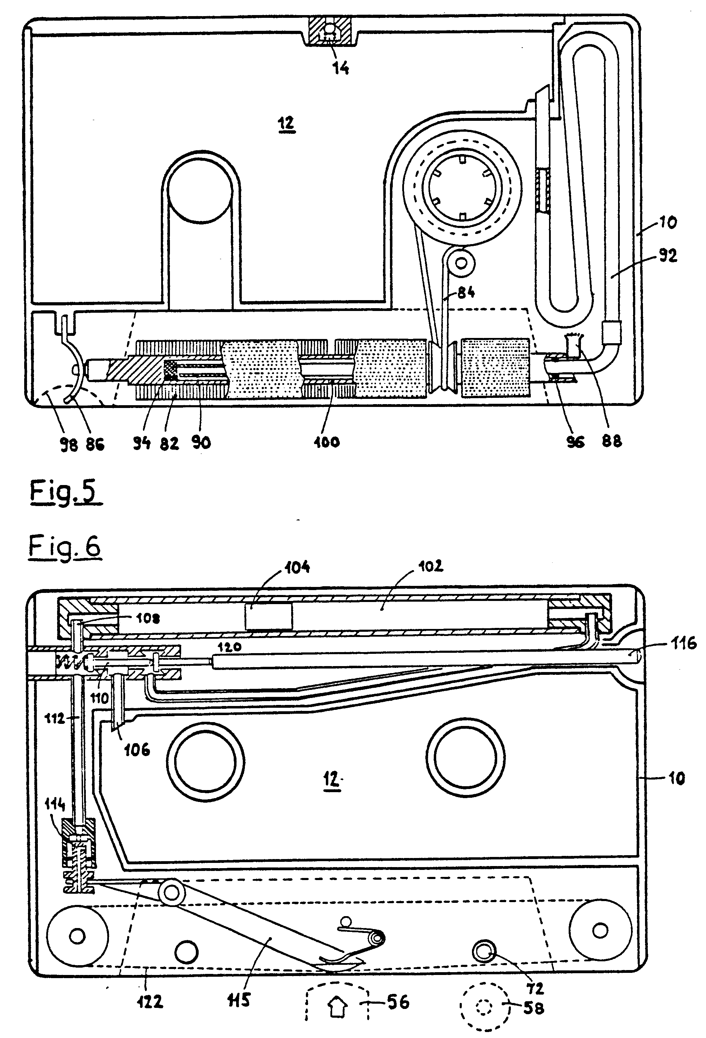

Bei dem Ausführungsbeispiel nach Fig. 5 hat die wiederum insgesamt mit 10 bezeichnete Reinigungskassette ebenfalls einen grossen inneren Hohlraum 12 zur Aufnahme von Reinigungsflüssigkeit, die über ein Einlassventil 14 eingefüllt wird. Als Reinigungsorgan dient in diesem Fall jedoch eine drehend sowie hin- und hergehend bewegbare Bürste 82, die vom Aufwickelantrieb des Geräts über einen Riemen 84 rotierend angetrieben wird. Während dieser Drehbewegung wird das mit Bezug auf Fig. 5 rechte Ende der Bürstenwalze 82, welches in der gezeigten Weise abgeschrägt ist, von einem Federbügel 86 gegen einen Anschlag 88 leicht angedrückt. Infolge der genannten Schrägfläche führt die Bürstenwalze 82 bei ihrer Drehung gleichzeitig auch eine hin- und hergehende axiale Bewegung aus.

Die Bürstenwalze 82 ist mit einer zentralen Sackbohrung 90 versehen, in die vom offenen rechten Ende her ein an den Hohlraum 12 angeschlossenes Kapillarrohr 92 hineinragt. Am geschlossenen linken Ende der Sackbohrung 90 wird ein dort befindliches Dichtungskissen 94 durch die Wirkung des Federbügels 86 gegen die Mündungsöffnung des Kapillarrohrs 92 angedrückt und dadurch dieses normalerweise geschlossen gehalten. Am anderen Ende der Sackbohrung 90 sorgt ein Dichtungsring 96 für Abdichtung des Ringspalts zwischen der Umfangswand der Sackbohrung und dem Rohr 92, dessen Innendurchmesser so klein bemessen ist, dass die Reinigungsflüssigkeit daraus nicht in den Hohlraum 12 zurückfliessen kann.

Unabhängig davon, wieviel Reinigungsflüssigkeit sich noch in dem Hohlraum 12 befindet und welche Lage die Reinigungskassette normalerweise im Gerät einnimmt, kann diese in der Hand so gehalten werden, dass sich die Einlassöffnung des Kapillarrohrs 92 unterhalb des Flüssigkeitsspiegels im Hohlraum 12 befindet. Wird dann der Federbügel 86 von Hand mit Bezug auf Fig. 5 nach links bewegt — damit der Federbügel zugänglich ist, hat das Kassettengehäuse eine gestrichelt angedeutete Ausnehmung 98 — so drückt der vorzugsweise über dem Atmosphärendruck liegende Dampfdruck der Reinigungsflüssigkeit diese durch das Kapillarrohr 92 zum Dichtungskissen 94 hin. Die Bewegung der Flüssigkeit im Kapillarrohr lässt sich gut beobachten, wenn für das Kassettengehäuse und das Kapillarrohr 92 transparenter Kunststoff verwendet wird. Sobald auf die beschriebene Weise die Luft aus dem Kapillarrohr ausgetrieben worden ist, wird der Federbügel 86 wieder losgelassen, dadurch das Dichtungskissen 94 dicht gegen das Ende des Kapillarrohrs 92 gedrückt und somit unabhängig von der weiteren Lage der Reinigungskassette die Reinigungsflüssigkeit im Kapillarrohr 92 gehalten. Legt man nun die Kassette in senkrechter oder waagerechter Lage in ein Gerät ein und startet den Kassettenantriebsmechanismus, so wird bei der oben beschriebenen hin- und hergehenden Bewegung der Bürstenwalze 82 zyklisch das Dichtungskissen 94 vom Ende des feststehenden Kapillarrohrs 92 abgehoben, so dass der Dampfdruck oder in anderer Weise erzeugte Druck im Hohlraum 12 wenigstens die im Kapillarrohr 92 enthaltene Reinigungsflüssigkeit in die Sackbohrung 90 der Bürstenwalze 82 drücken kann, von wo aus diese dann über kleine radiale Bohrungen 100 an die Borsten gelangt, welche den Tonkopf und die anderen zu reinigenden Organe des Geräts benetzen und reinigen.

Es versteht sich, dass bei dem Ausführungsbeispiel nach Fig. 5 anstelle einer Bürstenwalze 82 auch ein Reinigungsband Verwendung finden kann, welches entweder in sich geschlossen, d.h. endlos ist und bei Betätigung des Kassettenantriebsmechanismus ständig über Führungsrollen umläuft oder mit endlicher Länge von einer Vorratsrolle abläuft und auf eine Aufwickelrolle aufgewickelt wird. Die Abgabe der Reinigungsflüssigkeit an das Reinigungsband kann auch in diesem Falle in ähnlicher Weise wie bei dem Ausführungsbeispiel nach Fig. 5 über eine bestimmte Zeitdauer verteilt werden. Man braucht sich, ausgehend von Fig. 5, nur vorzustellen, dass die dort gezeigte Bürstenwalze 82 keine Borsten hat, das Reinigungsband an den Bohrungen 100 entlang geführt wird und diese durch eine feste äussere Abdeckung auf dem grössten Teil des Umfangs aussen abgedeckt sind, so dass die Reinigungsflüssigkeit nur auf einer Seite austritt und auf das Reinigungsband gelangt.

Bei dem Ausführungsbeispiel nach Fig. 6 ist ebenfalls wieder das Kassettengehäuse insgesamt mit 10 und der die Reinigungsflüssigkeit aufnehmende innere Hohlraum mit 12 bezeichnet. Weiterhin enthält das Kassettengehäuse 10 einen Dosierzylinder 102 mit einem darin frei beweglich geführten Kolben 104. Zwischen dem Hohlraum 12 und dem Dosierzylinder 102 ist eine Leitungsverbindung 106, 108 vorgesehen, die ein federbelastetes Umschaltventil 110 mit zwei Ventilkörpern aufweist. Der Leitungsteil 108 ist über eine weitere Leitung 112 mit einem Auslassventil 114 verbunden, welches normalerweise geschlossen gehalten ist, jedoch nach dem Einsetzen der Reinigungskassette in das Gerät und Betätigen des Kassettenantriebsmechanismus durch den Tonkopf 56 über einen Hebel 116 geöffnet wird.

Um den Dosierzylinder 102 mit Reinigungsflüssigkeit aus dem Hohlraum 12 zu füllen, wird die Reinigungskassette in der Hand so gehalten, dass sich die Einlassöffnung der Leitung 106 unter dem Flüssigkeitsspiegel im Hohlraum 12 befindet. Dann wird das Umschaltventil 110 mittels einer Betätigungsstange 116 manuell in diejenige Stellung umgestellt, bei welcher die Leitungsverbindung 106, 108 zum Dosierzylinder 102 hin geöffnet ist, so dass der Dampf- oder Treibdruck im Hohlraum 12 die Reinigungsflüssigkeit von dort in den Dosierzylinder 102 drücken kann, wobei der Zylinder 104 mit Bezug auf Fig. 6 nach rechts verschoben wird. Die Luft entweicht aus der rechten Seite des Dosierzylinders 102 über eine Leitung 118 und den während des Füllens des Dosierzylinders 102 geöffneten rechten Teil des Umschaltventils 110 in einen mit der Aussenatmosphäre in Verbindung stehenden Hohlraum 120 der Kassette.

Lässt man danach die Betätigungsstange 116 wieder los, geht das federbelastete Umschaltventil 110 in seine Ausgangsstellung zurück, in welcher nunmehr die Leitung 106 mit der Leitung 118 verbunden ist, so dass der Überdruck im Hohlraum 12 auf die rechte Seite des Kolbens 104 wirkt und dieser das Bestreben hat, die im Dosierzylinder 102 enthaltene Reinigungsflüssigkeit zum Auslassventil 114 zu drücken. Sobald dieses durch den Kassettenantriebsmechanismus, d.h. in diesem Fall durch den Tonkopf 156 über den Hebel 116 geöffnet wird, spritzt die Reinigungsflüssigkeit aus dem Auslassventil 114 unmittelbar auf ein endlos umlaufendes Reinigungsband 122, welches den Tonkopf 56 und die anderen zu reinigenden Organe des Geräts, wie z.B. die Capstanwelle 72 und die Andruckrolle 58 reinigt.

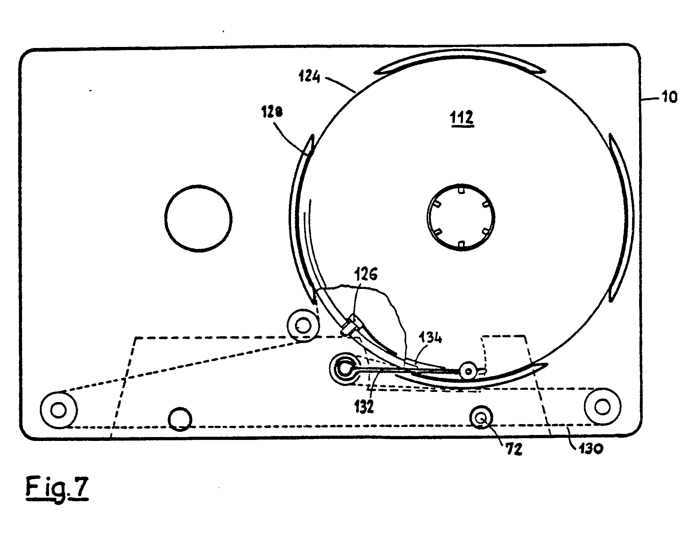

Bei dem Ausführungsbeispiel nach Fig. 7 befindet sich der die Reinigungsflüssigkeit aufnehmende Hohlraum 112 in einer durch den Kassettenantriebsmechanismus rotierend antreibbaren hohlen Trommel 124. An der Umfangswand der Trommel 124 sind ein oder mehrere Auslassventile 126 angeordnet, die jeweils geöffnet werden, wenn ein an ihnen angebrachter Betätigungsstift auf einen neben der Trommel 124 fest angeordneten festen Nocken 128 aufläuft. Wenn damit zu rechnen ist, dass die Reinigungskassette nicht nur waagrecht, sondern auch in einer senkrechten Stellung in ein Gerät eingesetzt wird, können über den Umfang der Trommel verteilt mehrere Nocken 128 angeordnet sein, so dass ein Auslassventil 126 auf jeden Fall auch in einer Stellung geöffnet wird, in welcher es sich unter dem Flüssigkeitsspiegel befindet.

Im Beispielsfall läuft ein Reinigungsband 130 um die Trommel 124. Der Antrieb der letzteren erfolgt demnach über den Aufwickelantrieb des Geräts und die Capstanwelle 72. Die Abgabe der Reinigungsflüssigkeit erfolgt unmittelbar vom Auslassventil 126 an das Band 130. Alternativ kann auch vorgesehen sein, dass das Auslassventil 126 einen Schwamm befeuchtet, welcher dann das Reinigungsband 130 benetzt.

Ebenso wie das Ausführungsbeispiel nach Fig. 1 hat auch die Ausführungsform nach Fig. 7 eine Endabschaltung, welche die Trommel 124 in einer bestimmten Drehwinkelstellung anhalten lässt, bei welcher das Auslassventil 126 nicht an einem Nocken 128 anliegt, also mit Sicherheit geschlossen ist. Der Abschaltmechanismus besteht aus einem Hebel 132, der am hinteren Ende verschwenkbar gelagert ist und mit seinem abgewinkelten freien Ende nach Art eines Tonarms in eine nur unvollständig gezeigte spiralförmige Rille 134 in einer Stirnfläche der Trommel 124 eingreift. Diese spiralförmige Rille 134 führt das freie Ende des Abschalthebels 132 bei mehreren Umdrehungen der Trommel 124 in Richtung zu deren Zentrum hin, bis dann plötzlich die Rille 134 endet. An diesem Ende hakt sich der Abschalthebel fest und hält die Trommel 124 an, so dass sich das Gerät von allein abschaltet.

**Patentansprüche**

1. Reinigungskassette zur Säuberung von Signalköpfen bei mit Magnetbandkassetten betriebenen Geräten, z.B. Kassetten-Recordern, Video-Recordern und Speichergeräten der Datenverarbeitung, mit einem Hohlraum (12, 112) zur Aufnahme wenigstens des für einen Reinigungsvorgang erforderlichen Volumens Reinigungsflüssigkeit und einem am Signalkopf mechanisch reibend angreifenden Reinigungsorgan (18, 82, 122, 130), welches mit der Reinigungsflüssigkeit benetzbar ist, dadurch gekennzeichnet, dass der Hohlraum (12, 112) dicht abgeschlossen ist und ein in einer Leitung (36, 42; 90, 92; 106, 108, 112) zwischen dem Hohlraum (12, 112) und dem Reinigungsorgan (18, 82, 122, 130) angeordnetes Auslassventil (40, 94, 114, 126) durch das Kassettengerät (56, 58, 72) betätigbar ist.

2. Kassette nach Anspruch 1, dadurch gekennzeichnet, dass der grösste Teil des inneren Hohlraums des Kassettengehäuses (10) eine mit einem Einlassventil (14) versehene, abgedichtete Kammer (12) zur Aufnahme von Reinigungsflüssigkeit bildet.

3. Kassette nach Anspruch 1, dadurch gekennzeichnet, dass die Reinigungsflüssigkeit durch eine Kolbenpumpe (16, 20, 22) über ein Rückschlagventil (38) aus dem Hohlraum (12) zum Auslassventil (40) förderbar ist, wobei der Pumpenkolben (22) beim Saughub gegen die Kraft einer Feder (24) manuell und beim Druckhub durch die Feder (24) antreibbar ist.

4. Kassette nach Anspruch 3, dadurch gekennzeichnet, dass der Kolben (22) in der Endstellung nach dem Saughub und in Zwischenstellungen durch einen in Schliessrichtung federbelasteten Riegel (46) arretierbar ist, welcher durch den Kassetten-Antriebsmechanismus (56, 58, 72) lösbar ist, und dass das Auslassventil (40) ein unter dem Druck der auf den Kolben (22) wirkenden Feder (24) öffnendes Rückschlagventil ist.

5. Kassette nach Anspruch 1, dadurch gekennzeichnet, dass am Ende des vorbestimmten Wegs eines während des Reinigungsvorgangs angetriebenen Teils ein Abschalthebel (78) sperrend am Band-Wickelantrieb (bei 74) angreift.

6. Kassette nach Anspruch 1, dadurch gekennzeichnet, dass der Hohlraum (12) ein in eine Aussparung des Kassettengehäuses (10) eingesetzter Behälter mit Reinigungsflüssigkeit ist, wobei dieser an die Leitung (36) zum Auslassventil (40) angeschlossen ist.

7. Kassette nach Anspruch 1, dadurch gekennzeichnet, dass die Reinigungsflüssigkeit im Hohlraum (12) mittels Druckgas oder eines federbelasteten Kolbens mit Druck beaufschlagbar ist.

8. Reinigungskassette nach Anspruch 1, dadurch gekennzeichnet, dass an den Hohlraum (12) ein zu einem auch willkürlich zu öffnenden Auslassventil (94) führendes Röhrchen (92) solcher Länge angeschlossen ist, dass sein Inhalt für einen Reinigungsvorgang ausreicht.

9. Reinigungskassette nach Anspruch 1, dadurch gekennzeichnet, dass ein Dosierzylinder (102) mit einem darin frei verschieblich geführten Kolben (104) mit seiner ersten Seite über ein willkürlich betätigbares Umschaltventil (110) an dem Hohlraum (12) anschliessbar und gleichzeitig seine zweite Seite entlüftet ist, und dass die letztere in der anderen Stellung des Umschaltventils (110) an den Hohlraum (12) anschliessbar ist, während dessen erste Seite mit dem Auslassventil (114) in Verbindung steht.

10. Reinigungskassette nach Anspruch 1, dadurch gekennzeichnet, dass sich der Hohlraum (12) in einer durch den Kassetten-Antriebsmechanismus drehbaren Trommel (124) mit wenigstens einem daran angebrachten Auslassventil (126) befindet, welches während einer Umdrehung der Trommel mit wenigstens einem es öffnenden Nocken (128) in Kontakt kommt.

## Claims

1. A cleaning cassette for cleaning magnetic heads in equipment operating with magnetic tape cassettes, for example cassette recorders, video recorders and storage equipment for data processing, with a hollow chamber (12, 112) for accommodating at least the volume of cleaning fluid required for one cleaning operation and a cleaning member (18, 82, 122, 130) which engages the magnetic head so as to rub mechanically thereagainst and which can be moistened with the cleaning fluid, characterised in that the hollow chamber (12, 112) is tightly sealed and an outlet valve (40, 94, 114, 126) disposed in a line (36, 42; 90, 92; 106, 108, 112) extending between the hollow chamber (12, 112) and the cleaning member (18, 82, 122, 130) can be actuated by the cassette equipment (56, 58, 72).

2. A cassette according to Claim 1, characterised in that the majority of the inner hollow chamber of the cassette casing (10) forms a sealed chamber (12) provided with an inlet valve (14) and for accommodating cleaning fluid.

3. A cassette according to Claim 1, characterised in that cleaning fluid can be fed by a piston pump (16, 20, 22) via a non-return valve (38) from the hollow chamber (12) to the outlet valve (40), and during the suction stroke the pump piston (22) can be displaced manually against the force of a spring (24) and during the compression stroke it can be displaced by the spring (24).

4. A cassette according to Claim 3, characterised in that in the end position after the suction stroke and in the intermediate positions the piston (22) can be locked by a lock means (46) which is spring loaded in locking direction and which can be released by the cassette drive mechanism (56, 58, 72), and in that the outlet valve (40) is a non-return valve which opens under the pressure of the spring (24) acting on the piston (22).

A cassette according to Claim 1, characterised in that at the end of the predetermined travel of a member driven during the cleaning operation a switch-off lever (78) engages the tape winding drive (at 74) so as to lock it.

6. A cassette according to Claim 1, characterised in that the hollow chamber (12) is a container for cleaning fluid fitted into a recess in the cassette casing (10), the container being connected to the line (36) leading to the outlet valve (40).

7. A cassette according to Claim 1, characterised in that compressed gas or a spring-loaded piston can pressurise the cleaning fluid in the hollow chamber (12).

8. A cleaning cassette according to Claim 1, characterised in that a small tube (92) leading to an outlet valve (94), which can also be opened at random, is connected to the hollow chamber (12) and is of such a length that its contents are sufficient for one cleaning operation.

9. A cleaning cassette according to Claim 1, characterised in that a metering cylinder (102) with a piston (104) guided freely displaceably therein can be connected at its first end to the hollow chamber (12) via a change-over valve (110), which can be actuated at random, and simultaneously its second end is vented, and in that the latter can be connected to the hollow chamber (12) in the other position of the change-over valve (110), while its first end is in communication with an outlet valve (114).

10. A cleaning cassette according to Claim 1, characterised in that the hollow chamber (12) is situated in a drum (124) rotatable by the cassette drive mechanism and having at least one outlet valve (124) mounted thereon which, during the rotation of the drum, comes into contact with at least one cam (128) so as to open it.

## Revendications

1. Cassette de nettoyage pour têtes magnétiques d'appareils fonctionnant avec des cassettes de bandes magnétiques, par exemple des cassettes d'enregistrements audio ou vidéo, d'appareils pour le traitement informatique de données, etc. cette cassette de nettoyage comportant une chambre (12, 112) destinée à recevoir au moins le volume de liquide de nettoyage qui est nécessaire pour effectuer au moins une opération de nettoyage, ainsi qu'un organe (18, 82, 122, 130) destiné à agir par frottement mécanique sur chaque tête magnétique en utilisant le liquide de nettoyage, cette cassette étant caractérisée par le fait que la chambre (12, 112) est fermée hermétiquement et qu'une soupape d'échappement (40, 94, 114, 126) est disposée dans une canalisation (36, 42; 90, 92; 106, 108, 112) entre la chambre (12, 112) et l'organe de nettoyage (18, 82, 122, 130) pour être actionnée par l'intermédiaire de l'appareil (56, 58, 72) utilisateur de cassettes.

2. Cassette selon la Revendication 1, caractérisée par le fait que la plus grande partie de l'espace intérieur du boîtier (10) de la cassette constitue une chambre hermétique (12) munie d'une soupape d'échappement (14) et destinée à recevoir le liquide de nettoyage.

3. Cassette selon la Revendication 1, caractérisée par le fait que le liquide de nettoyage peut être refoulé par une pompe à piston (16, 20, 22) par l'intermédiaire d'un clapet de non-retour (38) hors de la chambre (12) en direction de la soupape d'échappement (40), le piston (22) de la pompe pouvant être actionné manuellement, pendant la course d'aspiration, contre la résistance d'un ressort (24) et pendant la course de refoulement, par ce même ressort (24).

4. Cassette selon la Revendication 3, caractérisée par le fait que le piston (22), après une course d'aspiration, peut être soit stoppé dans une position extrême et dans des positions intermédiaires grâce à un verrou (46) sollicité par un ressort vers sa position de fermeture, soit déverrouillé par l'intermédiaire du mécanisme d'entraînement des cassettes (56, 58, 72), et que la soupape de détente (40) est constituée par un clapet de non-retour qui peut être ouvert par la pression du ressort (24) qui agit sur ledit piston (22).

5. Cassette selon la Revendication 1, caractérisée par le fait qu'au treme d'un parcours pré-établi effectué par une partie d'un levier de débrayage (78) entraîné pendant l'opération de nettoyage, ce levier agit sur le mécanisme d'enroulement de la bande (en 74) pour le bloquer.

6. Cassette selon la Revendication 1, caractérisée par le fait que la chambre (12) est constituée par un récipient qui contient le liquide de nettoyage et se loge dans une cavité du boîtier de la cassette (10) de manière à être relié par le passage (36) à la soupape de détente (40).

7. Cassette selon la Revendication 1, caractérisée par le fait que le liquide de nettoyage est mis sous pression dans la chambre (12) par l'intermédiaire soit d'un gaz fortement comprimé, soit d'un piston soumis à la sollicitation d'un ressort.

8. Cassette de nettoyage selon la Revendication 1, caractérisée par le fait que la chambre (12) est reliée à la soupape de détente (94) – que l'on peut aussi ouvrir arbitrairement – par un petit tube dont la longueur est déterminée de manière que son contenu suffise pour effectuer une opération de nettoyage.

9. Cassette de nettoyage selon la Revendication 1, caractérisée par le fait qu'il est prévu un cylindre doseur (102) dans lequel peut coulisser librement un piston (104) dont un premier côté peut être relié à la chambre (12) par l'intermédiaire d'une soupape d'inversion (110) que l'on peut actionner arbitrairement et dont le côté opposée est simultanément relié à l'atmosphère, et que ce côté opposé, dans l'autre position de la soupape d'inversion (110), peut être relié à la chambre (12), tandis que le premier côté du piston reste relié à la soupape d'échappement (114).

10. Cassette de nettoyage selon la Revendication 1, caractérisée par le fait qu'il est prévu dans la chambre (112) un tambour (124) entraîné en rotation par le mécanisme d'entraînement des cassettes et muni d'au moins une soupape d'échappement (126) laquelle, pendant la rotation du tambour, entre en contact avec au moins une came (128) propre à ouvrir cette soupape (126).

0127657

Fig.1

Fig.2

Fig.3

Fig.4

9

**Fig.5**

**Fig.6**

**Fig.7**